# EUROPÄISCHE PATENTSCHRIFT

(11) **EP 0 255 106 B1**
(45) Veröffentlichungstag und Bekanntmachung des Hinweises auf die Patenterteilung: **26.05.1993**
(21) Anmeldenummer: 87110916.1
(22) Anmeldetag: 28.07.1987
(51) Int. Cl.: C22C 38/40, C22C 38/42, C22C 38/44, C21C 5/00, C22C 33/00

(54) **Verfahren zur Herstellung korrosionsbeständinger Stähle und Gussstücke**
Process for the production of corrosion-resistant steels and castings
Procédé de fabrication d'aciers résistant à la corrosion et pièces coulées réalisées avec cet acier

(30) Priorität: 28.07.1986 DD 292917
(43) Veröffentlichungstag der Anmeldung: 03.02.1988
(73) Patentinhaber: Sächsische Edelstahlwerke GmbH Freital, 01705 Freital (DE)
(72) Erfinder: Erkel, Klaus-Peter, Dr.-Ing., DDR-8210 Freital (DD); Günzel, Manfred, Dr.-Ing., DDR-8021 Dresden (DD); Skuin, Konrad, Dr.-Ing., DDR-8045 Dresden (DD); Voigt, Christian, Dr., DDR-8090 Dresden (DD); Werner, Helmut, Dipl.-Chem., DDR-8010 Dresden (DD); Eckstein, Hans-Joachim, Prof.Dr.-Ing.Dr.hc., DDR-9200 Freiberg (DD); Spittel, Marlene, Dr.-Ing., DDR-9200 Freiberg (DD); Riedel, Gerd, Dr., DDR-8019 Dresden (DD); Weiss, Andreas, Dr.-Ing., DDR-9200 Freiberg (DD); Schuster, Jochen, Dipl.-Ing., DDR-4020 Halle/Saale (DD)
(74) Vertreter: Röhnicke, Heinz

(56) Entgegenhaltungen:
- EP-A- 0 150 244
- US-A- 3 682 711
- THE IRON AGE, Nr. 198, 08 Dezember 1966; J.J.OBRZUT, Seiten 119-124#
- HÜTTE, TASCHENBUCH FÜR EISENHÜTTENLEUTE, 1961; Seiten 53-56#
- DER PRAKTIKER, Band 12, 1972; Seiten 240-242#

## Beschreibung

Die Erfindung bezieht sich auf ein Verfahren zur Herstellung von korrosionsbeständigen Cr-Ni-Stählen und Gußstücken, welche der austenitischen Klasse angehören, die nicht mit Mo und Cu legiert sind.

Es ist bekannt, daß korrosionsbeständige (nichtrostende) Stähle und Gußstücke hochlegierte Werkstoffe mit einem Chromgehalt von mindestens 12 % sind. Sie zeichnen sich durch besondere Beständigkeit gegenüber korrosiven Medien aus. Dieses ist durch
DD-TGL 7143, Ausg. 12.81 "Korrosionsbeständige Stähle"
Technische Bedingungen (1)
DD-TGL 14394/01, Ausg. 9.81 "Gußstücke aus korrosionsbeständigen Stählen"
Technische Bedingungen (2)
offenbart.

Der Patentliteratur ist zu entnehmen, daß korrosionsbeständige Stähle und Gußstücke außer Chrom (Cr) zusätzlich Nickel (Ni), Molybdän (Mo), Kupfer (Cu), Kohlenstoff (C), Titan (Ti), Niob/Tantal (Nb/Ta), Mangan (Mn), Silizium (Si), Stickstoff (N), Bor (B) und Schwefel (S) einzeln oder gemeinsam enthalten können. Die Anteile dieser Elemente sind in nationalen und internationalen Standards oder Normen vorgeschrieben. Vom Hersteller sind sie einzuhalten und werden als Legierungselemente bezeichnet. Ist das Vorhandensein der als Legierungselemente bezeichneten Elemente im Standard nicht vorgeschrieben oder keine weitere Grenze dafür angegeben und befinden sich solche Elemente, bedingt durch die Herstellung aus Schrott oder Ferrolegierungen, unbeabsichtigt im Stahl, bezeichnet man sie als Begleitelemente. Es ist bekannt, daß die Rolle der Legierungselemente Chrom, Nickel, Molybdän, Kupfer, Mangan, Silizium, Kohlenstoff, Stickstoff, Titan, Niob/Tantal, Bor und Schwefel frühzeitig untersucht wurde und ständig weiter untersucht wird. Im Ergebnis entstanden und entstehen zahlreiche korrosionsbeständige Stähle, die je nach Höhe der vorgeschriebenen Legierungselemente ohne oder mit einer Wärmebehandlung gewünschte Gefüge und damit Verarbeitungs- und Gebrauchseigenschaften aufweisen.

In der Zeitschrift "The Iron age" vom 8. 12. 1966, S. 123 (3) ist offenbart, daß es möglich ist, bei bestimmten Stahllegierungen des "Types 316 und 317" die Korrosionsbeständigkeit durch einen Zusatz von Kupfer zu verbessern. Weiterhin enthält der Artikel den allgemeinen Hinweis, daß Kupfer teilweise Nickel ohne schädliche Nebenwirkungen ersetzen kann. An anderer Stelle des Artikels ist darauf hingewiesen, daß durch einen Zusatz von 0,5 bis 0,75 % Molybdän zu nichtrostenden Stählen deren Korrosionsbeständigkeit verbessert wird.

Vereinzelt wird in anderen Literaturstellen über negative Wirkungen berichtet, z. B. daß Rest-Ni in Ni-freien 17 %igen ferritischen Cr-Stählen den Anteil von Umwandlungsgefüge (Austenit) erhöht und damit die Schweißbarkeit verschlechtert oder daß Rest-Mo in Mo-freien austenitischen Cr-Ni-Stählen den Anteil von Ferrit erhöht und damit die Warmumformbarkeit und die mechanisch-technologischen Eigenschaften verschlechtert.

Derartige Einzeluntersuchungen offenbaren jedoch nicht oder nicht ausreichend, wie die Begleitelemente im Zusammenhang mit den vorgeschriebenen Legierungselementen auf die Korrosionsbeständigkeit wirken. Daher wurde die Höhe der Begleitelemente in den Standards bzw. Normen begrenzt.

In der
DD-TGL 7143, Ausg. 11.63 "Rost- und säurebeständige Stähle"
Technische Lieferbedingungen (4)
gültig im Zeitraum von 1963 bis 1973
erfolgte eine Begrenzung des Begleitelementes Cu mit maximal 0,30 %.

In der
DD-TGL 7143, Ausg. 12.73 "Rost- und säurebeständige Stähle"
Technische Lieferbedingungen (5)
gültig im Zeitraum von 1973 bis 1981
wurden folgende Begrenzungen festgelegt: In nicht mit Ni legierten Stählen ist ein Rest-Ni-Gehalt von 0,5 % zulässig, in nicht mit Cu legierten Stählen ist ein Rest-Cu-Gehalt von 0,3 % zulässig. In Cr-Ni-Stählen ist das Vorhandensein von Restwolfram, Restmolybdän, Restvanadin und Restkobalt von 0,5 % als Höchstwert mit Ausnahme solcher Fälle zulässig, in denen das Fehlen oder ein anderer Gehalt dieser Elemente in der Bestellung festgelegt ist.

In einigen neueren Standards sind konkrete Festlegungen für Begleitelemente nicht mehr enthalten. So ist z. B. in DD-TGL 7143 (1) in Pkt. 3.4.1 festgelegt: Elemente, welche nicht zulegiert sind, sind zulässig, soweit sie die Gebrauchseigenschaften einschließlich Weiterverarbeitung, Schweißeignung und Beständigkeit gegenüber korrosiven Medien nicht negativ beeinflussen.

Die Korrosionsbeständigkeit als Hauptgebrauchseigenschaft dieser Stahlgruppe ist schon immer von der Höhe der Legierungselemente abhängig und damit in Abhängigkeit von der Stahlmarke ein Erfahrungskennwert, eine qualitative Kenngröße (vergleiche hierzu "ESW Freital 'Korrosionsbeständige Stähle', Prospekt 1985, 1986 (6)").

Erst mit Einführung elektrochemischer Prüfmethoden, vor allem zur Kennzeichnung der Passivierbarkeit und der Lochfraßkorrosionsbeständigkeit, wie sie in
Voigt, C.; Riedel, G.; Werner, R.; Günzel, M.: Korrosion, Dresden 16 (1985), Heft 3, S. 119 - 130 (7)
beschrieben sind, sowie der Beständigkeit gegen Spaltkorrosion als ausschlaggebende Korrosionseigenschaften, ergaben sich Möglichkeiten, das Korrosionsverhalten von Stählen in Abhängigkeit von Legierungs- und Begleitelementen umfassender zu beschreiben.

Auch andere Verarbeitungs- und Gebrauchseigenschaften korrosionsbeständiger Stähle, wie Warm- und Kaltumformbarkeit, Gefügestabilität und Schweißbarkeit, werden mit sich ständig entwickelnder Prüftechnik immer eingehender untersucht, obwohl quantitative Kennwerte wie bei der Korrosionsbeständigkeit ebenfalls noch keinen Eingang in die nationalen und internationalen Standards gefunden haben.

Die einschlägigen Vorschriftenwerke und Literaturstellen (1), (6) enthalten daher nach wie vor die "Chemische Zusammensetzung" der Stähle als indirekten Gradmesser ihrer "Korrosionsbeständigkeit" als Hauptgebrauchseigenschaft. Zusätzlich sind vom Stahlhersteller mechanisch-technologische Kenngrößen bei Raumtemperatur, höheren und tieferen Temperaturen sowie eine ausreichende Weiterverarbeitbarkeit zu gewährleisten.

Mit ständig steigender Produktion der korrosionsbeständigen Stähle, steigendem Schrottaufkommen oftmals undefinierter Zusammensetzung sowie wechselndem Qualitätsniveau der Ferrolegierungen sind in den heutigen Stählen eine größere Anzahl Begleitelemente als früher mit relativ großer Schwankungsbreite enthalten. Damit sind Schwankungen der Verarbeitungs- und Gebrauchseigenschaften verbunden, wenn der Gehalt der Begleitelemente nicht begrenzt oder nicht nutzbar gemacht wird.

Der Erfindung liegt die Aufgabe zugrunde, ein Verfahren zur Herstellung von korrosionsbeständigen Cr-Ni-Stählen und Gußstücken, welche der austenitischen Klasse angehören, die nicht mit Mo und Cu legiert sind, zu schaffen, bei dem neben den Legierungselementen, diese teilweise ersetzend, gleichartig wirksame, im Schrott und/oder Ferrolegierungen enthaltene Begleitelemente zur Sicherung der Korrosionsbeständigkeit eingesetzt werden, wobei die ordnungsgemäße Verarbeitbarkeit sowie die erforderlichen mechanischen Eigenschaften gewährleistet werden.

Es wurde gefunden, daß zur Nutzung der im Schrott sowie in den Ferrolegierungen vor dem Abstich enthaltenen Begleitelemente von 0,01 bis 1,2 % Mo und von 0,01 bis 2,0 % Cu
a) ein Legierungspotential Cr' anstelle des Legierungsgehaltes Cr mit Cr' = % Cr + 2 x % Mo = 17,0 bis 19,0%
   - mit einem Gehalt an Cr ≧ 16 %,
   - mit dem angegebenen Gehalt des Begleitelementes Mo, und
b) ein Legierungspotential Ni' anstelle des Legierungsgehaltes Ni mit Ni' = % Ni + % Cu = 9,0 bis 12,0 %
   - mit einem Gehalt an Ni ≧ 8,5 %,
   - mit dem angegebenen Gehalt des Begleitelementes Cu,
verwendet wird, wobei die Gehalte der Stähle an Cr und Ni in Abhängigkeit von dem Gehalt an den Begleitelementen Mo und Cu gesenkt werden und dabei eine Passivierungsstromdichte (jp) < 8,50 mA cm⁻², ein Lochfraßpotential in saurer Lösung (U_{L(s)}) > 0,17 V_{H} und ein Lochfraßpotential in neutraler Lösung (U_{L(n)}) > 0,35 V_{H} eingehalten wird.

Mit dem erfindungsgemäßen Verfahren wird erreicht, daß die im Schrott und/oder in Ferrolegierungen in unterschiedlichen Anteilen enthaltenen Begleitelemente Molybdän (Mo) und Kupfer (Cu), in einem vorbestimmten Umfang, in einer berechenbaren Größe in einem aus dem Legierungselement und dem zugeordneten Begleitelement bestehenden Legierungspotential einsetzbar sind. Damit ist es möglich, die Begleitelemente technisch zu nutzen. Ihr Einsatz ermöglicht es bei Einhaltung der für die Stahlmarken vorgesehenen Parameter, den Gehalt der die Eigenschaften der Stahlmarken bestimmenden Legierungsbestandteile prozentual zu senken. Hierbei wird bei Nutzung des Begleitelementes Molybdän (Mo) mit dem erfindungsgemäßen Faktor 2 sogar eine sich verdoppelnde Senkung des Verbrauches an Chrom (Cr) erreicht.

Eine vorteilhafte Ausgestaltung des Verfahrens besteht darin, daß die Cr-Ni-Stähle und Gußstücke stabilisiert sind, deren Gehalt an Cr = 16 bis 19 %, Ni = 8,5 bis 12 %, C ≦ 0,15 %, Ti ≧ 4 x % C oder Nb/Ta ≧ 10 x % C beträgt, und in denen Mn, Si, P, S in technisch üblichen Grenzen als Verunreinigungen enthalten sind.

Eine weitere bevorzugte Ausgestaltung des Verfahrens besteht darin, daß die Cr-Ni-Stähle und Gußstücke nicht stabilisiert sind, deren Gehalt an Cr = 16 bis 19 %, Ni = 8,5 bis 12 %, C ≦ 0,15 % beträgt, und in denen Mn, Si, P, S in technisch üblichen Grenzen als Verunreinigungen enthalten sind.

Die Legierungspotentiale
a) Cr' = % Cr + 2 x % Mo = 17,0 bis 19,0 %
   - mit einem Gehalt an Cr ≧ 16 %,
   - mit einem Gehalt an Mo von 0,01 bis 1,2 % als Begleitelement, und
b) Ni' = % Ni + % Cu = 9,0-12,0 %
   - mit einem Gehalt an Ni ≧ 8,5 %,
   - mit einem Gehalt an Cu von 0,01 bis 2,0 % als Begleitelement,
garantieren die Mindestkorrosionsbeständigkeit sowie die anderen Verarbeitungs- und Gebrauchseigenschaften.

Die Mindestkorrosionsbeständigkeit ist, ausgedrückt durch die nach Korrosion, Dresden 16 (1985), Heft 3 (7) zu bestimmenden Kenngrößen:
Passivierungsstromdichte < jp = 8,50 mA cm⁻²
Lochfraßpotential (saure Lösung) > U_{L(s)} = 0,17 V_{H}
Lochfraßpotential (neutrale Lösung) > U_{L(n)} = 0,35 V_{H},
gültig für die Bereiche der Legierungselemente Cr 16 bis 19 %, Ni 8,5 bis 12 % und der Begleitelemente Mo 0,01 bis 1,2 % und Cu 0,01 bis 2,0 %. Die komplexe Wirkung der Legierungs- und Begleitelemente auf diese Kenngrößen wird durch Beziehungen der Art 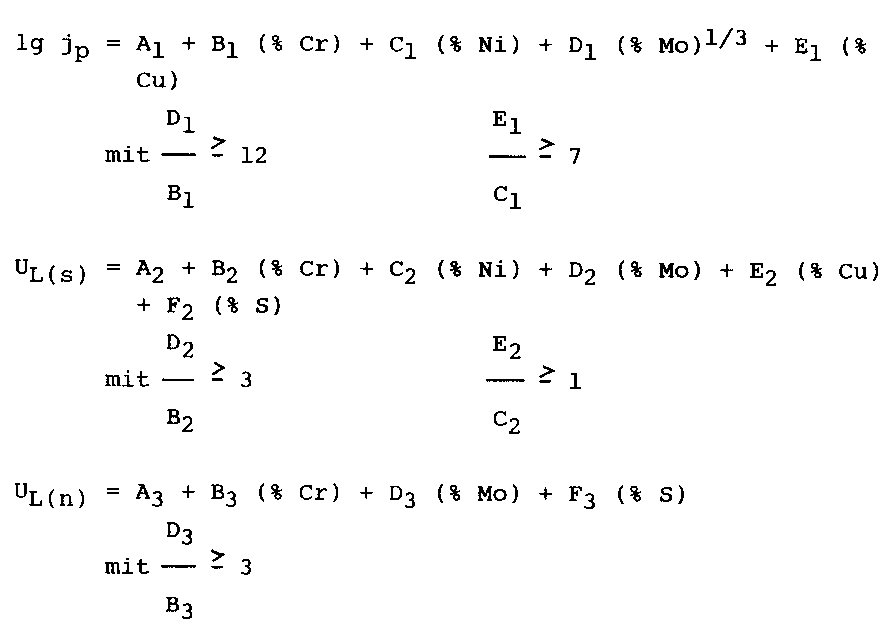
beschrieben.

Für die Nutzung der Legierungspotentiale müssen die Begleitelemente, die bei der Erschmelzung anfallen, bestimmt und berücksichtigt werden. Auf diese Weise werden die in der Charakteristik der bekannten technischen Lösungen beschriebenen negativen Wirkungen der Begleitelemente verhindert und ein engeres Eigenschaftsstreuband erreicht.

Gleichzeitig ergeben sich daraus ökonomischere Lösungen für die Herstellung bekannter korrosionsbeständiger Stähle und Gußstücke.

Die Erfindung soll nachstehend anhand eines Ausführungsbeispieles näher erläutert werden.

Ein Ti-stabilisierter Cr-Ni-Stahl vom Typ 18/10 besitzt folgende chemische Zusammensetzung:

**Tabelle 1**

| Chemische Zusammensetzung | | | | | | | | | |
|---|---|---|---|---|---|---|---|---|---|
| Variante | C | Si | Mn | P | S | Cr | Ni | Mo | Cu |
| I | 0,030 | 0,54 | 0,84 | 0,030 | 0,007 | 16,48 | 8,72 | 0,36 | 0,52 |
| II | 0,063 | 0,74 | 0,62 | 0,025 | 0,009 | 16,18 | 8,90 | 1,03 | 0,15 |

Für diese Schmelzen des Ti-stabilisierten Cr-Ni-Stahles vom Typ 18/10 ergeben sich folgende Korrosionswerte:

**Tabelle 2**

| Kennwerte für die Korrosionsbeständigkeit in Abhängigkeit der Legierungspotentiale | | | | | | |
|---|---|---|---|---|---|---|
| Schmelze | jp mA cm⁻² | | U_{L(s)} V_{H} | | U_{L(n)} V_{A} | |
| | berech. | gemessen von/bis | berechn. | gemessen von/bis | berechn. | gemessen von/bis |
| I | 1,22 | 1,18 | 0,41 | 0,42 | 0,59 | 0,48 |
| | | 1,22 | | 0,52 | | 0,63 |
| II | 0,54 | 0,58 | 0,50 | 0,36 | 0,70 | 0,59 |
| | | 0,62 | | 0,37 | | 0,73 |

Zusätzlich zur erfindungsgemäßen Bestimmung der Mindestkorrosionsbeständigkeit wurden die mechanisch-technologischen Eigenschaften bei Raumtemperatur, höheren Temperaturen und tiefer Temperatur bestimmt. Die Eigenschaften der im Ausführungsbeispiel dargestellten Stähle entsprechen den Festlegungen der internationalen Normen.

## Patentansprüche

1. Verfahren zur Herstellung korrosionsbeständiger Cr-Ni-Stähle und Gußstücke, welche der austenitischen Klasse angehören, die nicht mit Mo und Cu legiert sind, dadurch gekennzeichnet, daß zur Nutzung der im Schrott sowie in den Ferrolegierungen vor dem Abstich enthaltenen Begleitelemente von 0,01 bis 1,2 % Mo und von 0,01 bis 2,0 % Cu
a) ein Legierungspotential Cr' anstelle des Legierungsgehaltes Cr mit Cr' = % Cr + 2 x % Mo = 17,0 bis 19,0 %
- mit einem Gehalt an Cr ≧ 16 %,
- mit dem angegebenen Gehalt des Begleitelementes Mo, und
b) ein Legierungspotential Ni' anstelle des Legierungsgehaltes Ni mit Ni' = % Ni + % Cu = 9,0 bis 12,0 %
- mit einem Gehalt an Ni ≧ 8,5 %,
- mit dem angegebenen Gehalt des Begleitelementes Cu,
verwendet wird, wobei die Gehalte der Stähle an Cr und Ni in Abhängigkeit von dem Gehalt an den Begleitelementen Mo und Cu, gesenkt werden und dabei eine Passivierungsstromdichte (jp) < 8,50 mA Cm⁻², ein Lochfraßpotential in saurer Lösung (U_{L(s)}) > 0,17 V_{H} und ein Lochfraßpotential in neutraler Lösung (U_{L(n)}) > 0,35 V_{H} eingehalten wird.

2. Verfahren nach Anspruch 1, dadurch gekennzeichnet, daß die Cr-Ni-Stähle und Gußstücke stabilisiert sind, deren Gehalt an
Cr = 16 bis 19 %
Ni = 8,5 bis 12 %
C ≦ 0,15 %
Ti ≧ 4 x % C oder
Nb/Ta ≧ 10 x % C
beträgt und in denen Mn, Si, P, S in technisch üblichen Grenzen als Verunreinigungen enthalten sind;

3. Verfahren nach Anspruch 1, dadurch gekennzeichnet, daß die Cr-Ni-Stähle und Gußstücke nicht stabilisiert sind, deren Gehalt an
Cr = 16 bis 19 %
Ni = 8,5 bis 12 %
C ≦ 0,15 %
beträgt, und in denen Mn, Si, P, S in technisch üblichen Grenzen als Verunreinigungen enthalten sind.

## Claims

1. A process for the production of corrosion-resistant Cr-Ni steels and castings belonging to the austenitic class which are not alloyed with Mo and Cu, characterized in that for the utilization of the accompanying elements of 0.01 to 1.2% Mo and 0.01 to 2.0% Cu, contained in scrap and in ferro alloys prior to tapping, use is made of the following:
a) instead of the alloying content Cr an alloying potential Cr' having Cr' = % Cr + 2 x % Mo = 17.0 to 19.0%,
- a Cr content ≧ 16%,
- the stated content of the accompanying element Mo, and
b) instead of the alloying content Ni an alloying potential Ni' having Ni' = % Ni + % Cu = 9.0 to 12.0%,
- a Ni content ≧ 8.5%,
- the stated content of the accompanying element Cu,
the Cr and Ni contents of the steels being reduced in dependence on the content of the accompanying elements Mo and Cu, while maintaining a passivation current density (jp) < 8.50 mA cm⁻², a pitting potential in an acid solution (U_{L(s)}) > 0.17 V_{H} and a pitting potential in a neutral solution (U_{L(n)}) > 0.35 V_{H}).

2. A process according to claim 1, characterised in that the Cr-Ni steels and castings are stabilized, whose contents are as follows:
Cr = 16 to 19 %
Ni = 8.5 to 12 %
C ≦ 0.15 %
Ti ≧ 4 x % C or
Nb/Ta ≧ 10 x % C
and in which Mn, Si, P, S are contained as impurities within industrially customary limits.

3. A process according to claim 1, characterised in that the Cr-Ni steels and castings are not stabilized, whose contents are as follows:
Cr = 16 to 19 %
Ni = 8.5 to 12 %
C≦ 0.15%
and in which Mn, Si, P, S are contained as impurities within industrially customary limits.

## Revendications

1. Procédé de préparation d'aciers Cr-Ni et de pièces de fonderie résistants à la corrosion, qui appartiennent à la classe austénitique qui ne sont pas alliés à Mo et Cu, caractérisé en ce que pour utiliser les éléments d'accompagnement contenu dans la ferraille ainsi que dans les ferroalliages avant la percée avec 0,01 à 1,2 % Mo et 0,01 à 2,0 % Cu, on utilise:
a) un potentiel d'alliage Cr' au lieu de la teneur en alliage de Cr avec Cr' = % Cr + 2 x % Mo = 17,0 à 19,0 %,
- avec une teneur en Cr ≧ 16 %,
- avec la teneur indiquée des l'élément d'accompagnement Mo, et
b) un potentiel d'alliage Ni' au lieu de la teneur en alliage de Ni avec Ni' = % Ni + % Cu = 9,0 à 12,0 %,
- avec une teneur en Ni ≧ 8,5 %,
- avec la teneur indiquée de l'élément d'accompagnement Cu,
en diminuant les teneurs d'acier en Cr et Ni en fonction de la teneur en éléments d'accompagnement Mo et Cu et en maintenant ainsi une densité de courant de passivation (jp) < 8,50 mA cm⁻², un potentiel de corrosion par piqûre en solution acide (U_{L(s)})> 0,17 V_{H} et un potentiel de corrosion en solution neutre (U_{L(n)})> 0,35 V_{H}.

2. Procédé selon la revendication 1, caractérisé en ce que les aciers Cr-Ni et les pièces de fonderie sont stabilisés, dont la teneur en
Cr = 16 à 19 %
Ni = 8,5 à 12 %
C ≦ 0,15 %
Ti ≧ 4 x % C ou
Nb/Ta ≧ 10 x % C
et dans lesquels Mn, Si, P, S sont dans les limites usuelles des impuretés industrielles.

3. Procédé selon la revendication 1, caractérisé en ce que les aciers Cr-Ni et les pièces de fonderie ne sont pas stabilisés dont la teneur en
Cr = 16 à 19 %
Ni = 8,5 à 12 %
C ≦ 0,15 %
et dans lesquels Mn, Si, P, S sont dans les limites usuelles des impuretés industrielles.
